Europäisches Patentamt

European Patent Office

Office européen des brevets

(19)

(11) Numéro de publication : **0 069 688 B1**

(12) **FASCICULE DE BREVET EUROPÉEN**

(45) Date de publication du fascicule du brevet :
16.04.86

(21) Numéro de dépôt : **82440015.4**

(22) Date de dépôt : **28.05.82**

(51) Int. Cl.⁴ : **F 25 D 3/11, A 23 L 3/36**

(54) **Procédé de surgélation et de conditionnement de produits individuels, et dispositif pour la mise en œuvre de ce procédé.**

(30) Priorité : **29.05.81 FR 8110847**
**23.04.82 FR 8207197**

(43) Date de publication de la demande :
**12.01.83 Bulletin 83/02**

(45) Mention de la délivrance du brevet :
**16.04.86 Bulletin 86/16**

(84) Etats contractants désignés :
**AT BE CH DE GB IT LI LU NL SE**

(56) Documents cités :
**CA-A- 925 714**
**DE-A- 1 501 207**
**FR-A- 1 202 711**
**FR-A- 1 251 915**
**FR-A- 1 439 553**
**FR-A- 2 008 243**
**FR-A- 2 184 405**
**FR-A- 2 211 633**
**FR-A- 2 244 973**
**FR-A- 2 418 428**
**US-A- 3 048 989**
**US-A- 3 293 877**
**US-A- 3 361 192**
**US-A- 3 389 744**
**US-A- 4 060 400**
**US-A- 4 171 625**

(73) Titulaire : **Keller, Jean-Paul**
**15 rue des Remparts**
**F-68740 Balgau (FR)**

(72) Inventeur : **Keller, Jean-Paul**
**15 rue des Remparts**
**F-68740 Balgau (FR)**

(74) Mandataire : **Nuss, Pierre**
**10, rue Jacques Kablé**
**F-67000 Strasbourg (FR)**

Jouve, 18, rue St-Denis, 75001 Paris, France

## Descripttion

La présente invention concerne le domaine de la préparation de produits par surgélation en vue d'une longue conservation, et a pour objet un procédé de surgélation et de conditionnement de produits individuels.

L'invention a également pour objet un dispositif pour la mise en œuvre de ce procédé.

Actuellement, la surgélation de produits de consommation s'effectue généralement de manière industrielle, soit en continu au moyen d'un tunnel dans lequel sont déplacés les produits (FR-A- 2.211.633, US-A-4 171 625), soit par charges de produits dans des armoires de grande capacité (CA-A-925.714, FR-A-1.251.915, FR-A-2.008.243). Ces procédés de surgélation connus permettent un traitement industriel en continu et en grandes séries de produits piécés dans le cas des tunnels, ou de produits en vrac dans le cas des armoires.

Cependant, l'utilisation de ces tunnels ou armoires n'est pas adaptée à un débit moindre, par exemple de quelques kilogrammes de produits divers, pour une vente directe à des consommateurs individuels.

De plus, les armoires connues ne sont généralement pas reliées individuellement à une source froide, de sorte qu'un fonctionnement autonome est impossible, seul un fonctionnement en cascade avec prérefroidissement d'une ou plusieurs chambres ou armoires par une chambre ou armoire principale reliée à une source froide (FR-A-2 008 243) étant prévu, ou chaque chambre ou armoire étant alimentée séparément sans être en communication avec les autres chambres ou armoires (FR-A-1 251 915).

En outre, un tunnel ne permet la surgélation simultanée que de produits de mêmes dimensions, et l'utilisation d'armoires pour la préparation de faibles quantités individuelles n'est pas compatible avec un traitement économique.

La présente invention a pour but de pallier ces inconvénients.

Elle a, en effet, pour objet un procédé de surgélation et de conditionnement de produits individuels, caractérisé en ce qu'il consiste essentiellement à traiter de petites quantités individuelles de divers produits dans des caissons modulaires individuels de surgélation alimentés en gaz cryogénique et reliés chacun à un tunnel de surgélation de manière à réaliser dans ce dernier un bas niveau de température, et à traiter les quantités plus importantes de produits piécés dans le tunnel, muni d'une bande transporteuse, et qui est également alimenté en gaz cryogénique, à évacuer le gaz résiduel réchauffé obtenu à l'intérieur du tunnel, à empaqueter les produits sortant du tunnel dans un emballage isolant disposé dans un bac de réception monté à la sortie dudit tunnel, ou à remplir ledit emballage avec les produits issus d'un caisson, puis à recouvrir l'ensemble des produits disposés dans l'emballage avec un produit cryogénique, et à fermer l'emballage.

L'invention a également pour objet un dispositif pour la mise en oeuvre du procédé décrit ci-dessus, caractérisé en ce qu'il est essentiellement constitué par un bâti monté sur pieds portant des caissons modulaires individuels de surgélation et une armoire de commande électronique, par une conduite d'alimentation des caissons modulaires en gaz cryogénique, par un tunnel de surgélation aménagé sous le bâti et fermé à sa partie inférieure par une bande transporteuse montée sur un caisson étanche mobile, par un bac de réception prévu devant la sortie du tunnel, par un poste de conditionnement des emballages et de remplissage de ces derniers avec un produit cryogénique, par des conduites de circulation du gaz cryogénique entre les caissons et le tunnel, par un dispositif d'extraction et d'évacuation du gaz résiduel réchauffé hors du tunnel, et par un dispositif d'évacuation du gaz résiduel du poste de conditionnement.

Conformément à une variante de réalisation de l'invention, les caissons modulaires sont juxtaposés et/ou superposés, et la conduite d'alimentation de l'ensemble des caissons en gaz cryogénique est reliée à un dispositif de production de produit cryogénique sous forme de neige muni d'un récipient de réception dudit produit.

Selon une autre caractéristique de l'invention, chaque caisson est équipé de plateaux de support des produits à surgeler, munis d'un revêtement en matière anti-adhérente à très basse température en particulier celle connue sous la dénomination commerciale RILSAN de la société ATO Chimie, et dans sa partie avant, au-dessus de chaque plateau, d'au moins une buse d'injection de gaz cryogénique à jet plat et large, le caisson de récupération de l'énergie frigorifique étant également équipé de telles buses dont la commande est effectuée en fonction du gradient de température atteint dans ledit caisson, et le ventilateur de brassage du gaz cryogénique est un ventilateur centrifuge disposé au fond de chaque caisson derrière une plaque munie d'une ouverture en forme de Venturi et dont les bords sont espacés faiblement des parois internes du caisson de manière à favoriser le brassage du gaz dans ledit caisson et à accentuer la vitesse des gaz pour améliorer les échanges thermiques.

Conformément à une variante de réalisation de l'invention, le dispositif comporte, en outre, une source froide constituée par une installation de production de froid mécanique reliée de manière connue en soi à des échangeurs en plaques disposés devant les parois longitudinales, horizontales et verticales des caissons, avec espacement, et protégés de l'enceinte de surgélation renfermant les plateaux de support des produits au moyen d'une paroi circonférentielle intérieure reliée à la plaque de fond munie de l'ouverture en forme de Venturi, de manière à réaliser une canalisation de l'air propulsé par le ventilateur centrifuge le long des échangeurs.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue schématique en perspective du dispositif conforme à l'invention ;

la figure 2 est une vue en perspective du dispositif sans le bac de réception et le poste de conditionnement ;

la figure 3 est une vue en perspective, partiellement arrachée d'un caisson modulaire individuel ;

la figure 4 est une vue en élévation frontale et en coupe à travers plusieurs caissons modulaires juxtaposés et superposés ;

la figure 5 est une vue en coupe suivant A-A de la figure 4 ;

la figure 6 est une vue en coupe longitudinale, à plus grande échelle, d'un caisson modulaire, et

la figure 7 est une vue en élévation latérale et en coupe d'une variante de réalisation d'un caisson modulaire.

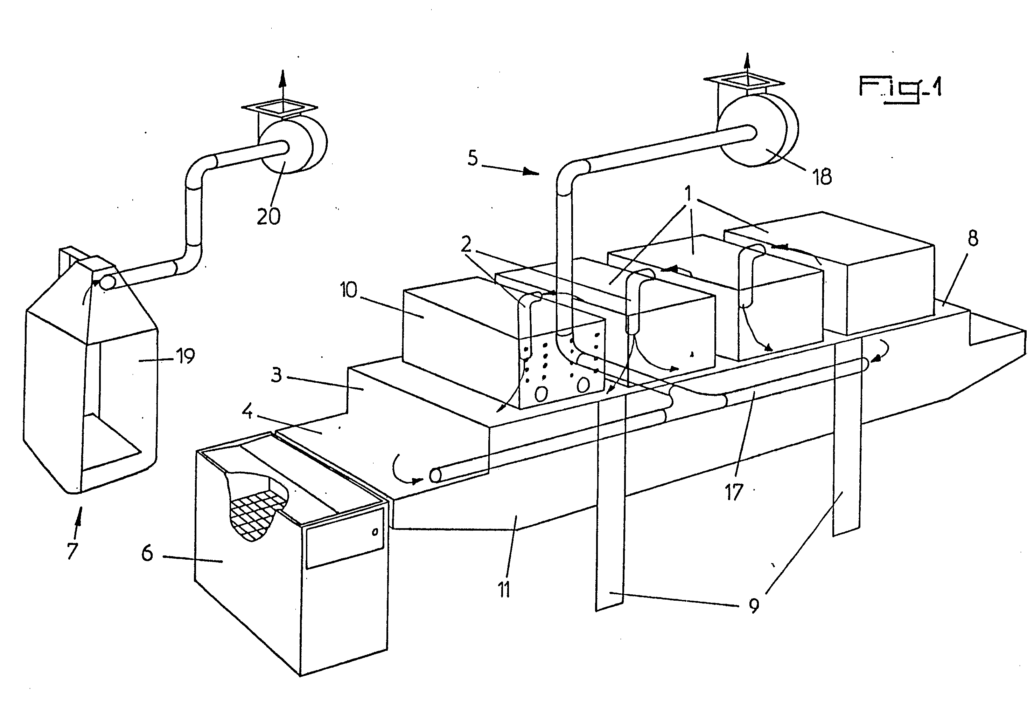

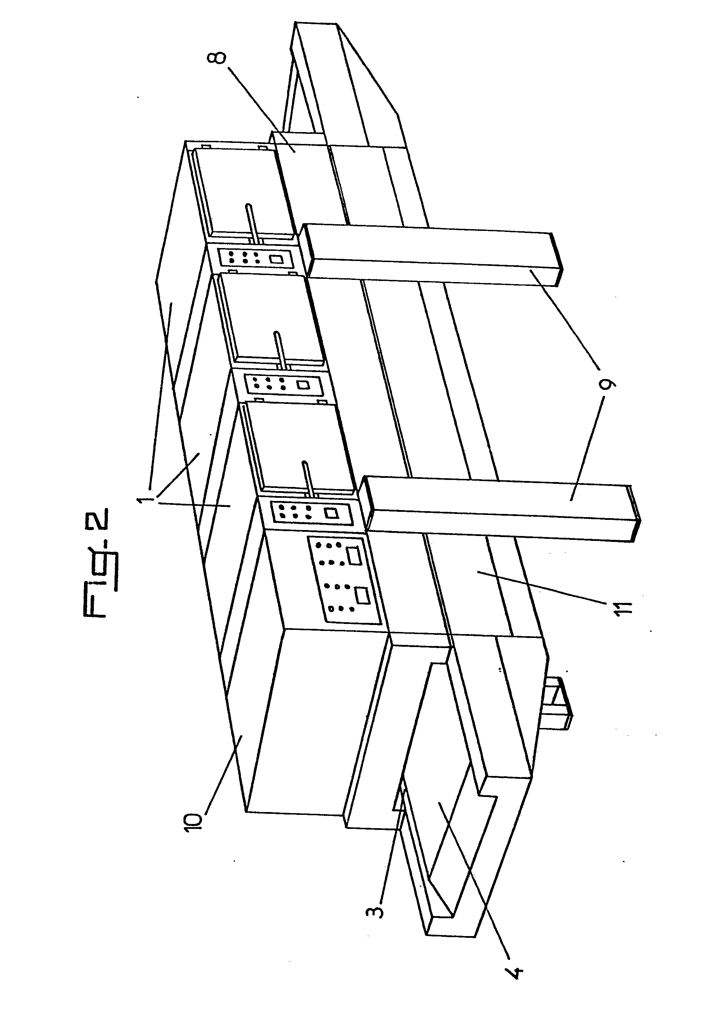

Conformément à l'invention, et comme le montre plus particulièrement, à titre d'exemple, la figure 1 des dessins annexés, le procédé de surgélation et de conditionnement de produits individuels consiste à traiter de petites quantités individuelles de divers produits dans des caissons modulaires individuels 1 de surgélation alimentés en gaz cryogénique par l'intermédiaire d'une conduite non représentée, et qui sont reliés chacun par des conduites 2 à un tunnel de surgélation 3 de manière à réaliser dans ce dernier un bas niveau de température, et à traiter les quantités plus importantes de produits piécés dans le tunnel 3, qui est muni d'une bande transporteuse 4 (figure 2), et qui est également alimenté directement en gaz cryogénique, à évacuer le gaz résiduel réchauffé obtenu à l'intérieur du tunnel 3 au moyen d'un dispositif 5 d'extraction et d'évacuation, à empaqueter les produits sortant du tunnel 3 dans un emballage isolant disposé dans un bac de réception 6 monté à la sortie dudit tunnel 3, ou à remplir ledit emballage avec les produits issus d'un caisson, puis à recouvrir l'ensemble des produits disposés dans l'emballage avec un produit cryogénique et à fermer l'emballage sur un poste 7 de conditionnement et de remplissage de produit cryogénique.

Du fait de l'alimentation du tunnel 3 en gaz résiduel issu des caissons 1, le niveau de température dans ledit tunnel est maintenu très bas, de sorte que lors de son utilisation, la dépense de gaz cryogénique pour atteindre la température de surgélation sera plus faible, et qu'ainsi le cycle de fonctionnement sera plus rapide.

Les caissons modulaires individuels 1 sont fixés sur un bâti 8 monté sur des pieds 9 et portant, en outre, une armoire électronique 10 de commande des caissons 1 et du tunnel 3. Ce dernier est aménagé sous le bâti 8 et est fermé à sa partie inférieure par la bande transporteuse 4 et à ses extrémités par des rideaux étanches connus. La bande transporteuse 4 est montée sur un caisson étanche 11 pouvant être déplacé verticalement le long des pieds 9 pour appliquer la bande transporteuse 4 de manière étanche, au moyen d'un joint double longitudinal, contre le bâti 8. Le déplacement du caisson 11 est réalisé, de manière connue en soi, au moyen de vérins, ou analogues, et pour permettre un nettoyage efficace de l'intérieur du tunnel 3 et de la bande 4, cette dernière est maintenue dans une position intermédiaire en position d'ouverture du caisson 11 grâce à des tiges de maintien coulissantes, et les vérins d'actionnement du caisson 11 peuvent être commandés de manière différentielle pour permettre une inclinaison dudit caisson 11 favorisant son nettoyage.

Le bac de réception 6 monté devant la sortie du tunnel 3 et devant la bande 4 est destiné au logement d'un emballage isolant à remplir avec des produits sortant du tunnel 3.

L'emballage rempli de produits est déplacé sur le poste 7 de conditionnement où lesdits produits sont recouverts d'une couche de produit cryogénique avant la fermeture de l'emballage, de manière à maintenir la chaîne du froid lors du transport.

La bande transporteuse 4 est avantageusement constituée en acier inoxydable et coulisse sur des glissières en matière synthétique fixées sur le châssis supportant la bande 4 dans des guides spéciaux permettant une dilatation différentielle entre acier et matière synthétique sans contrainte et sans déformation des glissières, et le moteur d'enchaînement de la bande 4 est également fixé sur le châssis supportant la bande et entraîne cette dernière au moyen de roues à chaînes, la tension de la bande et ses élongations différentielles étant compensées par un dispositif annexe connu en soi.

Les parois d'enceinte du tunnel 3 ainsi que les parois du caisson 11 sont avantageusement isolées au moyen d'un rembourrage de mousse de polyuréthane expansée.

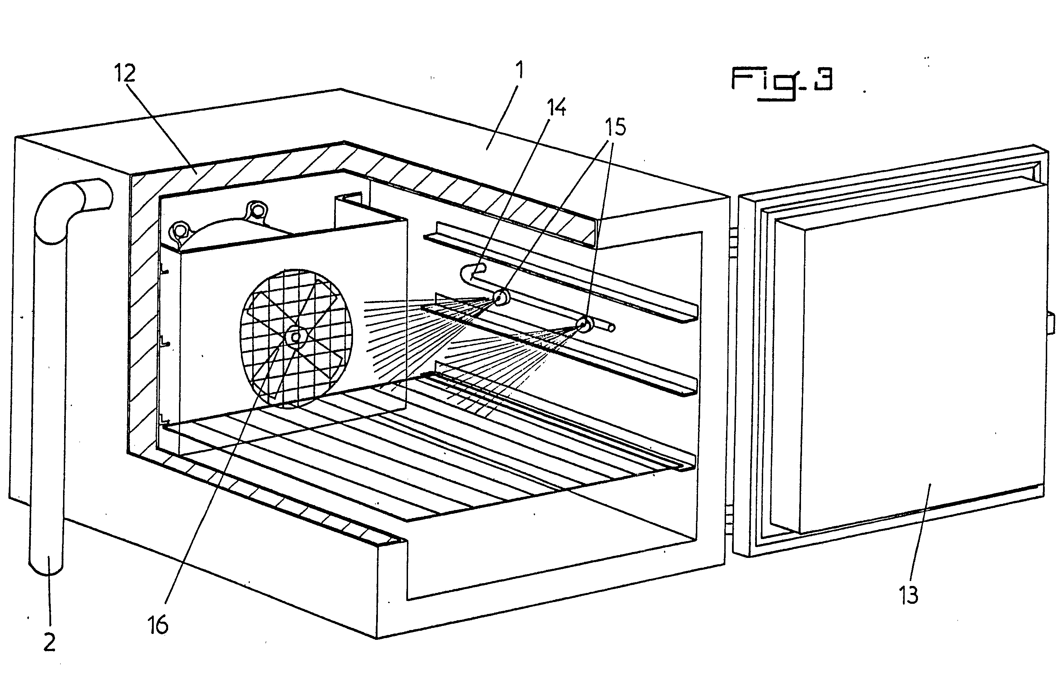

La figure 3 représente un caisson modulaire individuel 1 dont les parois sont remplies d'une couche de mousse expansée 12, et dont la porte 13 est également munie d'une matière isolante, et qui est muni d'une rampe 14 d'injection de gaz cryogénique comportant une ou plusieurs valves électromagnétiques 15 de réglage automatique de la quantité de gaz à injecter, ces valves étant commandées par un dispositif de régulation électronique disposé dans l'armoire électronique de commande 10, et par une sonde thermométrique (non représentée) disposée dans le caisson 1. A l'intérieur de chaque caisson 1 est, en outre, prévu un ventilateur axial 16 destiné à mettre le gaz en turbulence afin d'améliorer l'échange thermique entre les produits et le gaz.

L'injection de gaz cryogénique dans le tunnel 3 s'effectue de la même manière que pour les caissons 1, et sa mise en turbulence est effectuée par plusieurs ventilateurs axiaux fixés dans la paroi supérieure du tunnel, la surveillance de la température étant effectuée grâce à deux sondes disposées près de l'entrée et près de la sortie du tunnel 3.

Le dispositif 5 d'extraction et d'évacuation du gaz résiduel réchauffé est constitué par une conduite 17 reliée aux deux extrémités du tunnel 3 et à un ventilateur centrifuge d'extraction 18 aspirant ledit gaz et le rejetant hors du local, ce ventilateur 18 présentant avantageusement deux vitesses de fonctionnement pour une adaptation aux divers débits de gaz possibles.

Le poste 7 de conditionnement et de remplissage de produit cryogénique est également équipé d'un dispositif d'évacuation de gaz sous forme d'un moyen de collecte 19 relié à un ventilateur centrifuge d'extraction 20.

Le gaz cryogénique utilisé est avantageusement de l'anhydride carbonique, qui a la propriété de se sublimer en neige carbonique pendant son réchauffement.

L'armoire électronique de commande 10 renferme tous les éléments de commande et est hermétiquement fermée, et toutes les fonctions du dispositif sont signalisées au moyen de voyants lumineux, des interrupteurs de sécurité permettant la mise hors service du dispositif en cas de nécessité. En outre, l'armoire 10 renferme des circuits d'interdiction empêchant toute diffusion de gaz cryogénique en cas de panne des ventilateurs 18 et 20 ou d'ouverture du tunnel 3 ou d'une porte d'un caisson 1.

Enfin, la durée du traitement dans les caissons 1 ou la vitesse de défilement des produits dans le tunnel 3 sont réglées au moyen de l'armoire de commande 10.

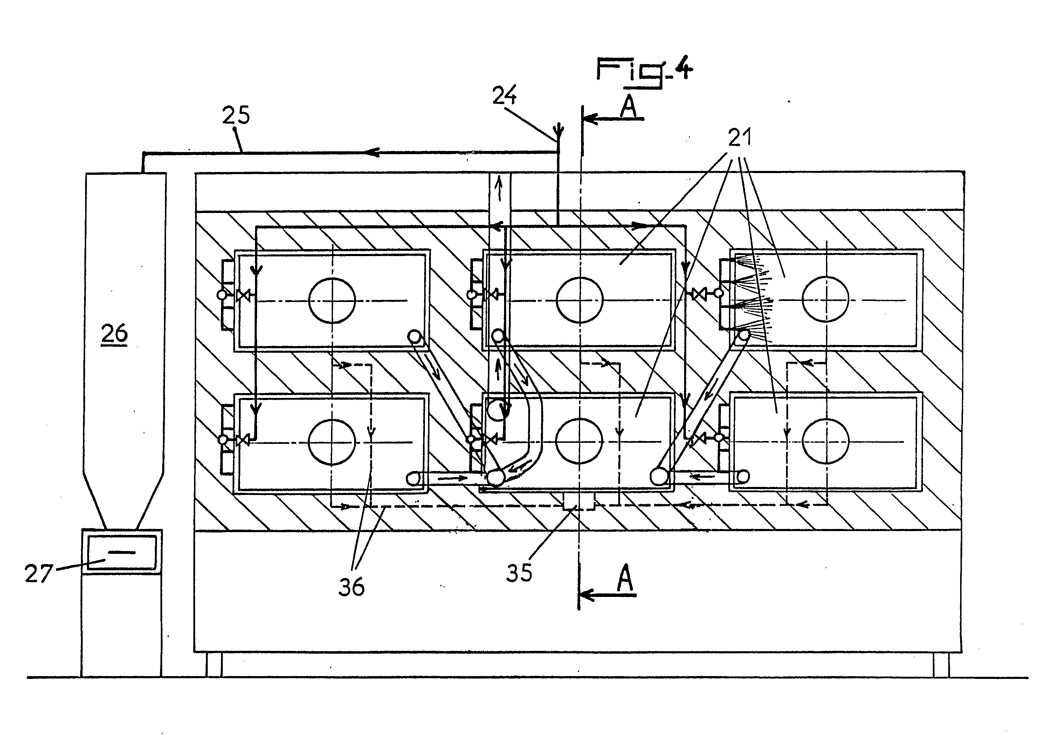

Selon les figures 4 à 6 des dessins annexés, les caissons modulaires 21 sont juxtaposés et superposés. La conduite 24 d'alimentation des caissons 21 en gay cryogénique est avantageusement reliée, par l'intermédiaire d'une dérivation 25 à un dispositif 26 de production de produit cryogénique sous forme de neige muni d'un récipient 27 de réception dudit produit.

Chaque caisson est muni de plateaux 28 de support des produits à surgeler, et une buse 29 d'injection de gaz cryogénique à jet plat et large est prévue dans la partie avant du caisson au-dessus de chaque plateau 28. Le caisson de récupération de l'énergie frigorifique est également équipé de telles buses 29 destinées à fournir l'appoint de froid nécessaire à un processus de surgélation rapide. Les plateaux 28 sont avantageusement munis chacun d'un revêtement en matière anti-adhérente à très basse température, telle que, notamment, celle connue sous la dénomination commerciale RILSAN.

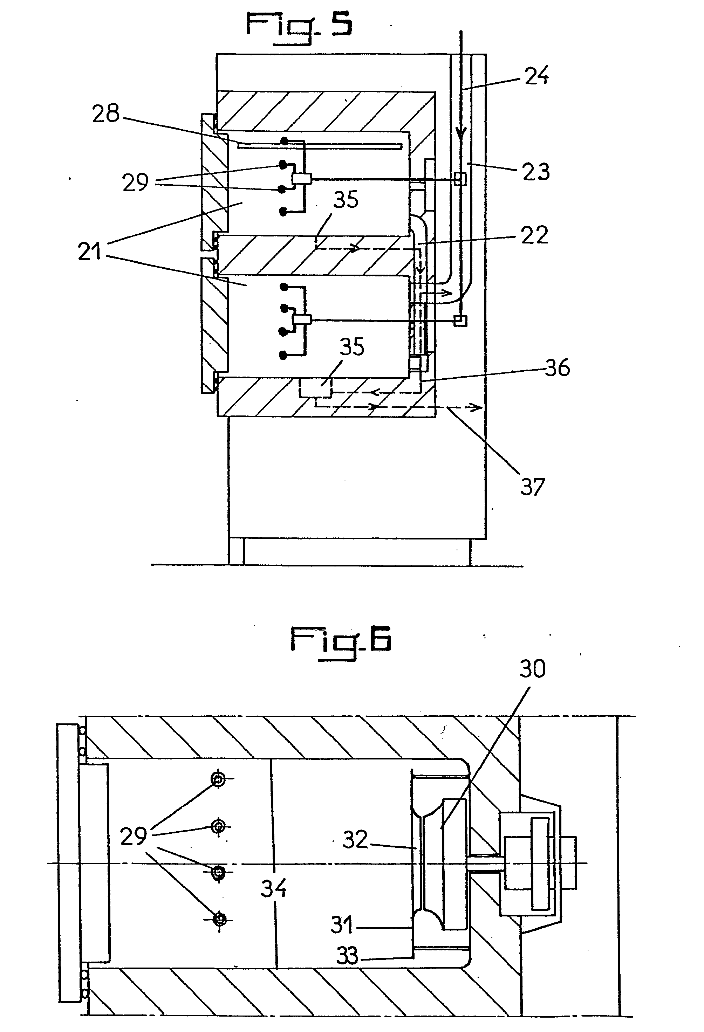

Au fond de chaque caisson 21 est monté un ventilateur centrifuge 30 (figure 6) de brassage du gaz cryogénique, disposé derrière une plaque 31 munie d'une ouverture 32 en forme de Venturi, et dont les bords 33 sont espacés faiblement des parois internes 34 du caisson 21. Grâce à ce mode de réalisation, il est réalisé un brassage efficace du gaz dans le caisson 21, de sorte que la vitesse de surgélation est augmentée pour une quantité de gaz injecté donnée.

Conformément à une autre caractéristique de l'invention, chaque caisson 21 est pourvu d'un dispositif de commande et de contrôle (non représenté) comportant des sondes thermométriques, un thermostat d'affichage de la température de traitement, un dispositif de commande séquentielle de l'injection de gaz cryogénique, dont les phases d'injection et d'arrêt sont préréglées, dont le fonctionnement est contrôlé par une sonde thermométrique, et dont le déclenchement est commandé par un bouton-poussoir déclenchant simultanément la mise en marche du ventilateur 30 et d'une minuterie de surveillance du fonctionnement de ce dernier correspondant au temps de traitement, l'arrêt de l'injection de gaz étant commandé par une autre minuterie déclenchée simultanément avec la première et préréglée de manière à assurer un arrêt de l'injection de gaz alors que le brassage du gaz dans le caisson est encore assuré par le ventilateur, dont la minuterie de contrôle est réglée sur un laps de temps plus long, par exemple de quelques minutes. Grâce à ce mode de réalisation, il est possible de mieux utiliser l'énergie du gaz cryogénique par mise en circulation dudit gaz, à la température désirée, à la fin du traitement, de sorte qu'une économie de gaz est possible.

En outre, pour assurer un traitement de surgélation parfait, quelle que soit la température ambiante du caisson, chaque caisson est muni d'une sonde thermométrique de commande du débit de traitement (non représenté) déclenchant les minuteries de contrôle dès atteinte d'une température de départ de traitement de donnée.

Afin de permettre une bonne élimination des eaux de lavage et de dégivrage, chaque caisson modulaire 21 est muni en son point le plus gbas d'un orifice de réception 35 relié à une conduite d'écoulement 36, ces conduites 36 étant avantageusement reliées entre elles au niveau du caisson de récupération d'énergie frigorifique pour déboucher dans une conduite commune 37.

Afin d'éviter une perte de gaz cryogénique lors de l'ouverture de la porte du caisson de récupération, ce dernier est pourvu d'un contact déclenchant un dispositif de coupure de l'injection de gaz dans toutes les autres cellules pendant ladite ouverture. Ainsi, il est possible de remplir le caisson de récupération en produits à traiter sans risque de perte de gaz, le traitement étant poursuivi dans les autres caissons par brassage du gaz s'y trouvant jusqu'à la fermeture du caisson de récupération permettant une poursuite normale des différents cycles de traitement.

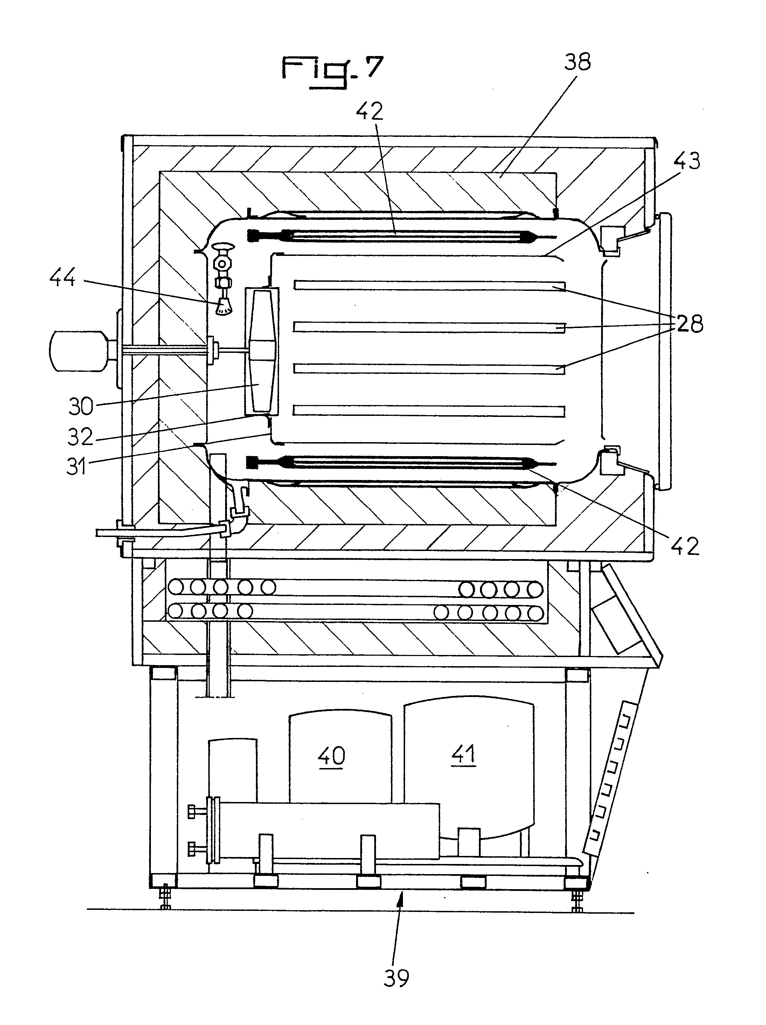

La figure 7 montre une variante de réalisation possible d'un caisson modulaire 38, dans laquelle est prévue, en outre une source froide constituée par une installation 39 de production de froid mécanique, formée par deux compresseurs 40 et 41 montés en cascade, qui est reliée de manière connue en soi à des échangeurs en plaques 42, qui sont disposés devant les parois longitudinales horizontales et verticales du caisson 38, à espacement de ces parois, et qui sont protégés de l'enceinte de surgélation renfermant les plateaux 28 au moyen d'une paroi circonférentielle intérieure 43. Cette dernière est reliée à la plaque de fond 31 munie de l'ouverture 32 en forme de Venturi débouchant sur le ventilateur 30, de sorte qu'est réalisée une canalisation de l'air propulsé par ce dernier le long des échangeurs 42. Ainsi, l'air mis en circulation par le ventilateur 30 permet un refroidissement rapide des produits à surgeler. Ce mode de réalisation est particulièrement intéressant pour la surgélation de produits de grandes dimensions non piécés pour lesquels une surgélation par cryogénie est relativement coûteuse, alors que la production de froid mécanique peut pratiquement être réalisée de manière continue avec un gradient de température très bas. En outre, pour garantir, en cas de besoin, une surgélation plus rapide des produits dans le caisson 38, du gaz cryogénique peut être injecté dans ce dernier à travers une buse 44 disposée derrière le ventilateur 30. Ainsi, le gaz injecté par la buse 44 est rapidement mis en circulation par le ventilateur 30, et les produits à traiter, saisis par le froid vif régnant dans le caisson du fait du froid mécanique produit, subissant une surgélation très rapide.

Conformément à une autre caractéristique de l'invention, non représentée aux dessins annexés, le dispositif de surgélation comprend au moins un caisson modulaire alimenté en froid mécanique combiné à un ensemble de caissons modulaires alimentés en gaz cryogénique dont l'un au moins est destiné à la récupération des frigories et est également relié au caisson à froid mécanique.

Grâce à l'invention, il est possible de réaliser une surgélation de produits divers exactement en fonction des besoins, en maintenant parfaitement, la chaîne du froid et avec une dépense énergétique faible.

**Revendications**

1. Procédé de surgélation et de conditionnement de produits individuels caractérisé en ce qu'il consiste essentiellement à traiter de petites quantités individuelles de divers produits dans des caissons modulaires individuels (1) de surgélation alimentés en gaz cryogénique et reliés chacun à un tunnel (3) de surgélation de manière à réaliser dans ce dernier un bas niveau de température, et à traiter les quantités plus importantes de produits piécés dans le tunnel (3), muni d'une bande transporteuse (4), et qui est également alimenté en gaz cryogénique, à évacuer le gaz résiduel réchauffé obtenu à l'intérieur du tunnel (3), à empaqueter les produits sortant du tunnel dans un emballage isolant disposé dans un bac de réception (6) monté à la sortie dudit tunnel (3), ou à remplir ledit emballage avec les produits issus d'un caisson, puis à recouvrir l'ensemble des produits disposés dans l'emballage avec un produit cryogénique, et à fermer l'emballage.

2. Dispositif pour la mise en oeuvre du procédé suivant la revendication 1, caractérisé en ce qu'il est essentiellement constitué par un bâti (8) monté sur pieds (9) portant des caissons modulaires individuels (1) de surgélation et une armoire de commande électronique (10), par une conduite d'alimentation des caissons modulaires (1) en gaz cryogénique, par un tunnel (3) de surgélation aménagé sous le bâti (8) et fermé à sa partie inférieure par une bande transporteuse (4) montée sur un caisson étanche (11) mobile, par un bac de réception (6) prévu devant la sortie du tunnel (3), par un poste (7) de conditionnement des emballages et de remplissage de ces derniers avec un produit cryogénique, par des conduites (2) de circulation du gaz cryogénique entre les caissons (1) et le tunnel (3), par un dispositif (5) d'extraction et d'évacuation du gaz résiduel réchauffé hors du tunnel (3), et par un dispositif (19-20) d'évacuation du gaz résiduel du poste de conditionnement (7).

3. Dispositif, suivant la revendication 2, caractérisé en ce que le tunnel (3) est fermé à ses extrémités par des rideaux étanches, la bande transporteuse (4) étant montée sur le caisson étanche (11), déplaçable verticalement le long des pieds (9) pour appliquer la bande transporteuse (4) de manière étanche, au moyen d'un joint double longitudinal, contre le bâti (8), et le déplacement du caisson (11) est réalisé, de manière connue en soi, au moyen de vérins, ou analogues, et pour permettre un nettoyage efficace de l'intérieur du tunnel (3) et de la bande (4), cette dernière est maintenue dans une position intermédiaire en position d'ouverture du caisson (11) grâce à des tiges de maintien coulissantes, et les vérins d'actionnement du caisson (11) sont commandés de manière différentielle pour permettre une inclinaison dudit caisson (11) favorisant son nettoyage.

4. Dispositif, suivant l'une quelconque des revendications 2 et 3, caractérisé en ce que la bande transporteuse (4) est constituée en acier inoxydable et coulisse sur des glissières en matière synthétique fixées sur le châssis supportant ladite bande (4) dans des guides spéciaux permettant une dilatation différentielle entre acier et matière synthétique sans contrainte et sans déformations des glissières, et le moteur d'entraînement de la bande (4) est également fixé sur le châssis supportant la bande et entraîne cette dernière au moyen de roues à chaînes, la tension de la bande et ses élongations différentielles étant compensées par un dispositif annexe connu en soi.

5. Dispositif, suivant l'une quelconque des revendications 2 à 4, caractérisé en ce que les parois d'enceinte du tunnel (3) ainsi que les parois du caisson (11) sont isolées au moyen d'un rembourrage de mousse de polyuréthanne expansée.

6. Dispositif, suivant l'une quelconque des revendications 2 à 5, caractérisé en ce que chaque caisson modulaire (1) est muni d'une rampe (14) d'injection de gaz cryogénique comportant une ou plusieurs valves électromagnétiques (15) de réglage automatique de la quantité de gaz à injecter, ces valves étant commandées par un dispositif de régulation électronique disposé dans l'armoire électronique de commande (10), et par une sonde thermométrique disposée dans le caisson (1) et à l'intérieur de chaque caisson (1) est, en outre, prévu un ventilateur axial (16) destiné à mettre le gaz en turbulence afin d'améliorer l'échange thermique entre les produits et le gaz.

7. Dispositif, suivant l'une quelconque des revendications 2 à 6, caractérisé en ce que l'injection de gaz cryogénique dans le tunnel (3) s'effectue de la même manière que pour les caissons (1), et sa mise en turbulence est effectuée par plusieurs ventilateurs axiaux fixés dans la paroi supérieure du tunnel, la surveillance de la température étant effectuée grâce à deux sondes disposées près de l'entrée et près de la sortie du tunnel (3).

8. Dispositif, suivant la revendication 2, caractérisé en ce que le dispositif (5) d'extraction et d'évacuation du gaz résiduel réchauffé est constitué par une conduite (17) reliée aux deux extrémités du tunnel (3) et à un ventilateur centrifuge d'extraction (18) aspirant ledit gaz et le rejetant hors du local, ce ventilateur (18) présentant avantageusement deux vitesses de fonctionnement pour une adaptation aux divers débits de gaz possibles.

9. Dispositif, suivant la revendication 2, caractérisé en ce que le poste (7) de conditionnement et de remplissage de produit cryogénique est équipé d'un dispositif d'évacuation de gaz sous forme d'un moyen de collecte (19) relié à un ventilateur centrifuge d'extraction (20).

10. Dispositif, suivant l'une quelconque des revendications 2 à 9, caractérisé en ce que le gaz cryogénique utilisé est de l'anhydride carbonique, qui a la propriété de se sublimer en neige carbonique pendant son réchauffement.

11. Dispositif, suivant la revendication 2, caractérisé en ce que l'armoire électronique de commande (10) renferme tous les éléments de commande et est hermétiquement fermée, et toutes les fonctions du dispositif sont signalisées au moyen de voyants lumineux, des interrupteurs de sécurité permettant la mise hors service du dispositif en cas de nécessité, et en outre, l'armoire (10) renferme des circuits d'interdiction empêchant toute diffusion de gaz cryogénique en cas de panne des ventilateurs (18) et (20) ou d'ouverture du tunnel (3) ou d'une porte d'un caisson (1).

12. Dispositif, suivant l'une quelconque des revendications 2 à 11, caractérisé en ce qu'enfin, la durée du traitement dans les caissons (1) ou la vitesse de défilement des produits dans le tunnel (3) sont réglées au moyen de l'armoire de commande (10).

13. Dispositif, suivant la revendication 2, caractérisé en ce que les caissons modulaires (21) sont juxtaposés et/ou superposés, et la conduite (24) d'alimentation de l'ensemble des caissons en gaz cryogénique est reliée à un dispositif (26) de production de produit cryogénique sous forme de neige muni d'un récipient (27) de réception dudit produit cryogénique.

14. Dispositif, suivant la revendication 13, caractérisé en ce que chaque caisson est équipé de plateaux (28) de support des produits à surgeler, munis d'un revêtement en matière anti-adhérente à très basse température, et dans sa partie avant, au-dessus de chaque plateau (28), d'au moins une buse (29) d'injection de gaz cryogénique à jet plat et large, le caisson de récupération de l'énergie frigorifique étant également équipé de telles buses dont la commande est effectuée en fonction du gradient de température atteint dans ledit caisson, et le ventilateur de brassage du gaz cryogénique est un ventilateur centrifuge (30) disposé au fond de chaque caisson derrière une plaque (31) munie d'une ouverture (32) en forme de Venturi et dont les bords (33) sont espacés faiblement des parois internes (34) du caisson de manière à favoriser le brassage du gaz dans ledit caisson et à accentuer la vitesse des gaz pour améliorer les échanges thermiques.

15. Dispositif, suivant l'une quelconque des revendications 13 et 14, caractérisé en ce que chaque caisson (21) est pourvu d'un dispositif de commande et de contrôle comportant des sondes thermométriques, un thermostat d'affichage de la température de traitement, un dispositif de commande séquentielle de l'injection de gaz cryogénique, dont les phases d'injection et d'arrêt sont préréglées, dont le fonctionnement est contrôlé par une sonde thermométrique, et dont le fonctionnement est contrôlé par une sonde thermométrique, et dont le déclenchement est commandé par un bouton-poussoir déclenchant simultanément la mise en marche du ventilateur (30) et d'une minuterie de surveillance du fonctionnement de ce dernier correspondant au temps de traitement, l'arrêt de l'injection de gaz étant commandé par une autre minuterie déclenchée simultanément avec la première et préréglée de manière à assurer un arrêt de l'injection de gaz alors que le brassage du gaz dans le caisson est encore assuré par le ventilateur dont la minuterie de contrôle est réglée sur un laps de temps plus long, par exemple de quelques minutes.

16. Dispositif, suivant l'une quelconque des revendications 13 à 15, caractérisé en ce que chaque caisson est muni d'une sonde thermométrique de commande du début de traitement déclenchant les minuteries de contrôle dès atteinte d'une température de départ de traitement donnée.

17. Dispositif, suivant l'une quelconque des revendications 13 à 16, caractérisé en ce que chaque caisson modulaire (21) est muni en son point le plus bas d'un orifice de réception (35) pour les eaux de lavage et de dégivrage relié à une conduite d'écoulement (36), ces conduites (36) étant reliées entre elles au niveau du caisson de récupération d'énergie frigorifique pour déboucher dans une conduite commune (37).

18. Dispositif, suivant l'une quelconque des revendications 13 à 17, caractérisé en ce que, afin d'éviter une perte de gaz cryogénique lors de l'ouverture de la porte du caisson de récupération, ce dernier est pourvu d'un contact déclenchant un dispositif de coupure de l'injection de gaz dans toutes les autres cellules pendant ladite ouverture.

19. Dispositif, suivant la revendication 13, caractérisé en ce qu'il comporte, en outre, une source froide constituée par une installation de production de froid mécanique (39) reliée de manière connue en soi à des échangeurs en plaques (42) disposés devant les parois longitudinales, horizontales et verticales des caissons (38), avec espacement, et protégés de l'enceinte de surgélation renfermant les plateaux (28) de support des produits au moyen d'une paroi circonférentielle intérieure (43) reliée à la plaque de fond (31) munie de l'ouverture (32) en forme de Venturi, de manière à réaliser une canalisation de l'air propulsé par le ventilateur centrifuge (30) le long des échangeurs (42).

20. Dispositif, suivant l'une quelconque des revendications 13 à 19, caractérisé en ce qu'il comprend au moins un caisson modulaire alimenté en froid mécanique combiné à un ensemble de caissons modulaires alimentés en gaz cryogénique, dont l'un au moins est destiné à la récupération des frigories et est également relié au caisson à froid mécanique.

## Claims

1. A process for deep-freezing and packaging individual products, characterised in that it consists essentially in treating small individual quantities of various products in individual modular deep-freeze boxes (1) fed with cryogenic gas and each connected to a deep-freeze tunnel (3) in such a manner as to create a low level of temperature in the latter, and in treating the larger quantities of products divided into pieces in the tunnel (3) equipped with a conveyor belt (4) and lekewise fed with cryogenic gas, in evacuating the residual heated gas obtained inside the tunnel (3), in packing the products leaving the tunnel in an insulating package disposed in a receiving container (6) mounted at the outlet from said tunnel (3) or in filling said package with the products discharged from a box, then in covering all the products disposed in a package with a cryogenic product and in closing the package.

2. A device for carrying out the process as claimed in Claim 1, characterised in that it consists essentially of a frame (8) mounted on legs (9) carrying individual modular deep-freeze boxes (1) and an electronic control cabinet (10), of a pipe for feeding the modular boxes (1) with cryogenic gas, of a deep-freeze tunnel (3) disposed below the frame (8) and closed at its lower portion by a conveyor belt (4) mounted on a movable sealed box (11), of a receiving container (6) provided in front of the outlet of the tunnel (3), of a station (7) for packing the packages and filling the latter with a cryogenic product, of pipes (2) for circulating cryogenic gas between the boxes (1) and the tunnel (3), of a device (5) for the extraction and evacuation of the residual heated gas from the tunnel (3) and of a device (19-20) for evacuating the residual gas from the packing station (7).

3. A device as claimed in claim 2, characterised in that the tunnel (3) is closed at its ends by impervious screens, the conveyor belt (4) being mounted on the sealed box (11), displaceable vertically along the legs (9) to apply the conveyor belt (4) in a sealed manner, by means of a double longitudinal seal, against the frame (8), and the displacement of the box (11) being effected, in a manner known per se, by means of jacks or the like, and in order to permit an effective cleaning of the interior of the tunnel (3) and of the belt (4), the latter is held in an intermediate position, in an open position of the box (11) thanks to sliding holding rods, and the jacks for actuating the box (11) are controlled in a differential manner to permit an inclination of said box (11) facilitating its cleaning.

4. A device as claimed in either one of the claims 2 and 3, characterised in that the conveyor belt (4) consists of stainless steel and slides on slides of synthetic material fixed to the frame supporting said belt (4) in special guides permitting a differential expansion between steel and synthetic material without stress and without deformation of the slides, and the drive motor for the belt (4) is likewise fixed to the frame supporting the belt and drives the latter by means of chain wheels, the tension of the belt and its differential elongation being compensated by an accessory device known per se.

5. A device as claimed in any one of the Claims 2 to 4, characterised in that the surrounding walls of the tunnel (3) as well as the walls of the box (11) are insulated by means of a padding of expanded polyurethane foam.

6. A device as claimed in any one of the Claims 2 to 5, characterised in that each modular box (1) is equipped with a pipe (14) for the injection of cryogenic gas comprising one or more electromagnetic valves (15) for the automatic regulation of the quantity of gas to be injected, these valves being controlled by an electronic regulation device disposed in the electronic control cabinet (10), and by a thermometric probe disposed in the box (1) and further provided in the interior of each box (1) is an axial fan (16) adapted to produce turbulence in the gas in order to improve the heat exchange between the products and the gas.

7. A device as claimed in any one of the Claims 2 to 6, characterised in that the injection of cryogenic gas into the tunnel (3) is effected in the same manner as for the boxes (1) and turbulence is produced in it by a plurality of axial fans fixed in the upper wall of the tunnel, the monitoring of the temperature being effected by means of two probes disposed close to the inlet and close to the outlet of the tunnel (3).

8. A device as claimed in Claim 2, characterised in that the device (5) for the extraction and evacuation of the residual heated gas consists of a pipe (17) connected to the two ends of the tunnel (3) and to a centrifugal extraction fan (18) drawing in said gas and discharging it outside the premises, this fan (18) advantageously having two speeds of operation for adaptation to various possible flows of gas.

9. A device as claimed in Claim 2, characterised in that the station (7) for packing and filling with cryogenic product is equipped with a gas evacuation device in the form of a collecting means (19) connected to a centrifugal extraction fan (10).

10. A device as claimed in any one of the Claims 2 to 9, characterised in that the cryogenic gas used is carbon dioxide which has the property of being sublimated into dry ice during its reheating.

11. A device as claimed in Claim 2, characterised in that the electronic control cabinet (10) contains all the control elements and is hermetically sealed and all the operations of the device are signalled by means of visual indicators, safety switches enabling the device to be put out of service if necessary and, in addition, the cabinet (10) contains prohibition circuits preventing any diffusion of cryogenic gas in the event of failure of the fans (18) and (20) or of opening of the tunnel (3) or of a door of a box (1).

12. A device as claimed in any one of the Claims 2 to 11, characterised in that ultimately, the duration of the treatment in the boxes (1) or the speed of passage of the products through the tunnel (3) are regulated by means of the control cabinet (10).

13. A device as claimed in Claim 2, characterised in that the modular boxes (21) are juxtaposed and/or superimposed and the pipe (24) for feeding all the boxes with cryogenic gas is connected to a device (26) for the production of cryogenic product in the form of snow, equipped with a receiving receptacle (27) for said cryogenic product.

14. A device as claimed in Claim 13, characterised in that each box is equipped with trays (28) to support the products to be deep frozen, equipped with a covering of a material which is anti-adhesive at very low temperature, and, in its front portion, above each tray (28), with at least one nozzle (29) for the injection of cryogenic gas with a flat wide jet, the box for the recuperation of the refrigerating energy being likewise equipped with such nozzles, the control of which is effected depending on the temperature gradient reached in said box, and the fan for stirring the cryogenic gas is a centrifugal fan (30) disposed at the bottom of each box behind a plate (31) equipped with an aperture (32) of Venturi shape, and the edges (33) of which are slightly spaced apart from the internal walls (34) of the box in such a manner as to promote the stirring of the gas in said box and to increase the speed of the gases to improve the heat exchange.

15. A device as claimed in any one of the Claims 13 and 14, characterised in that each box (21) is provided with a control and monitoring device comprising thermometric probes, a thermostat for displaying the treatment temperature, a device for the sequential control of the injection of cryogenic gas, the injection and stoppage phases of which are preset, the operation of which is monitored by a thermometric probe and the triggering of which is controlled by a pushbutton starting simultaneously the starting of the fan (30) and of a timer for monitoring the operation of the latter corresponding to the treatment time, the stoppage of the injection of gas being controlled by another timer started simulteneously with the first and preset in such a manner as to ensure a stoppage of the injection of gas when the stirring of the gas in the box is still ensured by the fan, the control timer of which is set to a period of time which is longer, for example by a few minutes.

16. A device as claimed in any one of the Claims 13 to 15, characterised in that each box is equipped with a thermometric probe to control the beginning of treatment starting the control timers as soon as a given initial treatment temperature is reached.

17. A device as claimed in any one of the Claims 13 to 16, characterised in that each modular box (21) is equipped at its lowest point with a receiving aperture (35) for washing and defrosting water, which aperture is connected to a drain pipe (36), these pipes (36) being interconnected at the level of the box for the recuperation of refrigerating energy to lead into a common pipe (37).

18. A device as claimed in any one of the Claims 13 to 17, characterised in that, in order to avoid a loss of cryogenic gas when the recuperation box door is opened, the latter is provided with a contact triggering a device for cutting off the injection of gas into all the other cells during said opening.

19. A device as claimed in Claim 13, characterised in that it also comprises a cold source consisting of an installation for the mechanical production of cold (39) connected in a manner known per se to plate exchangers (42) disposed in front of the longitudinal, horizontal and vertical walls of the boxes (38), with spacing and protected from the deep-freeze enclosure enclosing the trays (28) for supporting the products by means of an interior circumferential wall (43) connected to the bottom plate (31) equipped with a Venturi-shaped aperture (32) in a such a manner as to produce a canalization of the air propelled by the centrifugal fan (30) along the exchangers (42).

20. A device as claimed in any one of the Claims 13 to 19, characterised in that it comprises at least one modular box fed with mechanical cold combined with an assembly of modular boxes fed with cryogenic gas, at least one of which is adapted for the recovery of the negative kilo-calories and is likewise connected to the mechanical cold box.

**Patentansprüche**

1. Verfahren zur Tiefkühlung und zur Verpackung einzelner Produkte, dadurch gekennzeichnet, daß es im wesentlichen darin besteht, einzelne, kleine Mengen verschiedener Produkte in einzelnen, modularen Tiefkühlkästen (1) zu behandeln, welche mit Tieftemperaturgas gespeist werden und jeder mit einem Gefriertunnel (3) verbunden ist, um in dem letzteren eine tiefe Temperaturstufe herzustellen, und um die größeren Mengen von in Stücke geteilten Produkten in dem Tunnel (3) zu behandeln, der mit einem ·Transportband (4) verbunden ist und der ebenfalls mit Tieftemperaturgas gespeist wird, das erwärmte, im Inneren des Tunnels (3) angefallene Restgas zu entleeren, die aus dem Tunnel austretenden Produkte in eine in einem Auffangbehälter (6) angeordnete, am Ausgang des Tunnels (3) montierte Isolierverpackung zu verpacken, oder die besagte Verpackung mit den aus einem Kasten herauskommenden Produkten zu füllen, dann die gesamten, in der Verpackung angeordneten Produkte mit einem Kühlmittel zu überziehen, und die Verpackung zu verschließen.

2. Vorrichtung zur Durchführung des Verfahrens nach Anspruch 1, dadurch gekennzeichnet, daß sie im wesentlichen aus einem auf Füße (9) montierten Gestell (8), das einzelne, modulare Tiefkühlkästen (1) und einen elektronischen Schaltschrank (10) trägt, aus einer Leitung zur Speisung der modularen Kästen (1) mit Tieftemperaturgas, aus einem Gefriertunnel (3), der unter dem Gestell (8) untergebracht und an seinem Unterteil durch ein auf einen dichten, beweglichen Kasten (11) montiertes Transportband (4) abgeschlossen ist, aus einem vor dem Ausgang des Tunnels (3) vorgesehenen Auffangbehälter (6), aus einer Station (7) zur Verpackung der Packungen und Füllung dieser letzteren mit einem Kühlmittel, aus Leitungen (2) für die Zirkulation des Tieftemperaturgases zwischen den Kästen (1) und dem Tunnel (3), aus einer Vorrichtung (5) zur Absaugung und Entleerung des erwärmten Restgases aus dem Tunnel (3), und aus einer Vorrichtung (19-20) zur Entleerung des Restgases aus der Verpackungsstation (7), besteht.

3. Vorrichtung nach Anspruch 2, dadurch gekennzeichnet, daß der Tunnel (3) an seinen Enden durch dichtschließende Vorhänger verschlossen ist, wobei das Transportband (4) auf dem dichten Kasten (11) entlang der Füße (9) vertikal verschiebbar montiert ist, um das Transportband (4) dichtschließend, mittels einer doppelten Längsdichtung, an das Gestell (8) anzusetzen, und die Verschiebung des Kastens (11), auf bekannte Art, mit ·Hilfe von Zylindern, oder ähnlichem, durchgeführt wird, und um eine wirksame Reinigung des Inneren des Tunnels (3) und des Transportbandes (4) zu ermöglichen, das letztere in einer Zwischenstellung bei geöffnetem Kasten (11) mit Hilfe von gleitenden Stützstangen festgehalten wird, und die Zylinder zur Betätigung des Kastens (11) differential gesteuert werden, um eine Neigung des besagten Kastens (11), die das Reinigen erleichtert, zu ermöglichen.

4. Vorrichtung nach einem der Ansprüche 2 und 3, dadurch gekennzeichnet, daß das Transportband aus rostfreiem Stahl besteht und auf Laufschienen aus synthetischem Material gleitet, welche auf dem das besagte Band (4) in Spezialführungen tragenden Chassis befestigt sind, die eine differentielle Wärmedehnung zwischen Stahl und Kunststoffmaterial ohne Belastung und ohne Deformierung der Laufschienen ermöglichen, und der Antriebsmotor des Transportbandes (4) ebenfalls auf dem Chassis befestigt ist, welches das Band trägt, und der dieses letztere mit Hilfe von Kettenrädern antreibt, wobei die Spannung des Bandes und seine differentiellen Elongationen durch eine Zusatzvorrichtung der bereits bekannten Art kompensiert werden.

5. Vorrichtung nach einem der Ansprüche 2 bis 4, dadurch gekennzeichnet, daß die Umfassungswände des Tunnels (3) sowie die Wandungen des Kastens (11) mittels einer Schaumfüllung aus porig-zelligem Polyurethan isoliert sind.

6. Vorrichtung nach einem der Ansprüche 2 bis 5, dadurch gekennzeichnet, daß jeder modulare Kasten (1) mit einem Gestänge (14) zur Einspritzung von Tieftemperaturgas ausgestattet ist, welches eines oder mehrere elektromagnetische Ventile (15) zur automatischen Regelung der einzuspritzenden Gasmenge besitzt, wobei diese Ventile durch eine in dem elektronischen Schaltschrank (10) angeordnete elektronische Regelvorrichtung, und durch eine Wärmesonde, die in dem Kasten (1) vorgesehen ist, gesteuert werden, und innerhalb jedes Kastens (1) außerdem ein Axiallüfter (16) vorgesehen ist, der dazu dient, das Gas in Turbulenz zu versetzen, um den Wärmeaustausch zwischen den Produkten und dem Gas zu verbessern.

7. Vorrichtung nach einem der Ansprüche 2 bis 6, dadurch gekennzeichnet, daß die Einspritzung des Tieftemperaturgases in den Tunnel (3) auf die gleiche Weise erfolgt wie bei den Kästen (1), und es durch mehrere, in der oberen Wandung des. Tunnels befestigte Axiallüfter in Turbulenz versetzt wird, wobei die Temperaturüberwachung mittels zwei Sonden erfolgt, die bei dem Eingang und bei dem Ausgang des Tunnels (3) angeordnet sind.

8. Vorrichtung nach Anspruch 2, dadurch gekennzeichnet, daß die Vorrichtung (5) zum Absaugen und Entleeren des erwärmten Restgases aus einer an den beiden Enden des Tunnels (3) und an einem Absaug-Zentrifugalgebläse (18) angeschlossenen Leitung (17) besteht, welches das besagte Gas ansaugt und es aus dem Raum vertreibt, wobei dieses Gebläse (18) vorteilhaft zwei Betriebsgeschwindigkeiten für eine Anpassung an die verschiedenen möglichen Gasdurchflußmengen aufweist.

9. Vorrichtung nach Anspruch 2, dadurch gekennzeichnet, daß die Station (7) zur Verpackung und Füllung mit Kühlmittel mit einer Gasableitungseinrichtung in Form eines Sammelmittels (19) ausgestattet ist, welches an ein Absaug-Zentrifugalgebläse (20) angeschlossen ist.

10. Vorrichtung nach einem der Ansprüche 2 bis 9, dadurch gekennzeichnet, daß das verwendete Tieftemperaturgas aus Kohlendioxid besteht, welches die Eigenschaft hat, während seiner Erwärmung in Trockeneis überzugehen.

11. Vorrichtung nach Anspruch 2, dadurch gekennzeichnet, daß der elektronische Steuerschrank (10) alle Steuerelemente beherbergt und hermetisch abgeschlossen ist, und alle Funktionen des Geräts mittels Kontrollampen angezeigt werden, wobei Sicherheitsschalter im Notfall ein Abschalten des Geräts ermöglichen, und außerdem der Schrank (19) Sperrschaltungen beinhaltet, die jede Verbreitung von Tieftemperaturgas im Falle eines Ausfalls der Gebläse (18) und (20) oder der Öffnung des Tunnels (3) oder einer Türe eines Kastens (1) verhindern.

12. Vorrichtung nach einem der Ansprüche 2 bis 11, dadurch gekennzeichnet, daß schließlich die Dauer der Behandlung in den Kästen (1) oder die Durchlaufgeschwindigkeit der Produkte in dem Tunnel (3) mittels des Steuerschranks (10) geregelt wird.

13. Vorrichtung nach Anspruch 2, dadurch gekennzeichnet, daß die modularen Kästen (21) nebeneinander und/oder übereinandergestellt werden, und die Leitung (24) zur Speisung aller Kästen mit Tieftemperaturgas an ein Gerät (26) zur Kühlmittelherstellung in Form von Schnee angeschlossen ist, das mit einem Kasten (27) zur Aufnahme des besagten Kühlmittels versehen ist.

14. Vorrichtung nach Anspruch 13, dadurch gekennzeichnet, daß jeder Kasten zum Ablage der tiefzufrierenden Produkte mit Platten (28) ausgestattet ist, welche mit einem Überzug aus bei sehr tiefer Temperatur antiadhäsivem Material versehen sind, und an seiner Vorderseite, oberhalb jeder Platte (28), mit mindestens einer Düse (29) zur Einspritzung des Tieftemperaturgases mit flachem, breitem Strahl, wobei der Kasten zur Rekuperation der Tiefkühlenergie ebenfalls mit solchen Düsen versehen ist, deren Betätigung abhängig von dem in dem besagten Kasten erreichten Temperaturgradienten erfolgt, und das Gebläse zur Mischung des Tieftemperaturgases ein Zentrifugalgebläse (30) ist, das im Hintergrund jedes Kastens hinter einer mit einer venturiförmigen Öffnung (32) versehenen Platte (31) angeordnet ist, und deren Ränder (33) von den Innenwänden (34) des Kastens einen leichten Abstand haben, um das Durchmischen des Gases in dem besagten Kasten zu begünstigen und die Geschwindigkeit der Gase zur Verbesserung des Wärmeaustauschs zu verstärken.

15. Vorrichtung nach einem der Ansprüche 13 und 14, dadurch gekennzeichnet, daß jeder Kasten (21) mit einer Steuer- und Kontrollvorrichtung ausgestattet ist, welche Wärmesonden, einen Thermostat zur Anzeige der Kühltemperatur, ein Gerät zur Ablaufsteuerung der Tieftemperaturgaseinspritzung besitzt, dessen Einspritz- und Stillstandphasen voreingestellt sind, dessen Betrieb durch eine Wärmesonde überwacht wird, und dessen Einsetzen durch einen Tastknopf betätigt wird, der gleichzeitig den Anlauf des Gebläses (30) und einer Zeituhr zur Überwachung des Betriebs dieses letzteren, welcher der Kühlzeit entspricht, auslöst, wobei der Stillstand der Gaseinspritzung durch eine andere Zeituhr gesteuert wird, die gleichzeitig mit der ersten ausgelöst und so voreingestellt wird, daß ein Anhalten der Gaseinspritzung gewährleistet ist, während die Durchmischung des Gases in dem Kasten darüber hinaus durch das Gebläse sichergestellt wird, dessen Kontrolluhr auf einen längeren Zeitraum, z. B. einige Minuten, eingestellt wird.

16. Vorrichtung nach einem der Ansprüche 13 bis 15, dadurch gekennzeichnet, daß jeder Kasten mit einer Wärmesonde zur Steuerung des Gefrierbeginns versehen ist, welche die Kontrolluhren bei Erreichen einer gegebenen Ausgangskühltemperatur auslöst.

17. Vorrichtung nach einem der Ansprüche 13 bis 16, dadurch gekennzeichnet, daß jeder modulare Kasten (21) an seinem tiefsten Punkt mit einer Auffangöffnung (35) für Wasch- und Tauwasser versehen ist, die an eine Abflußleitung (36) angeschlossen ist, wobei diese Leitungen (36) in Höhe der Rekuperation der Tiefkühlenergie miteinander verbunden sind, um in eine gemeinsame Leitung (37) zu münden.

18. Vorrichtung nach einem der Ansprüche 13 bis 17, dadurch gekennzeichnet, daß, um einen Verlust an Tieftemperaturgas während der Öffnung der Tür des Rekuperationsbehälters zu vermeiden, dieser letztere mit einem Kontakt versehen ist, welcher eine Vorrichtung zur Unterbrechung der Gaseinspritzung in allen anderen Zellen während der besagten Öffnung auslöst.

19. Vorrichtung nach Anspruch 13, dadurch gekennzeichnet, daß sie außerdem eine Kältequelle enthält, die aus einer Einrichtung zur mechanischen Kälteerzeugung (39) besteht, welche auf bereits bekannte Art mit vor den Längs-, Horizontal- und Vertikalwänden der Kästen (38), mit Zwischenraum, angeordneten Plattentauschern (42) verbunden ist, und die vor dem Kühlraum geschützt sind, der die Platten (28) zur Ablage der Produkte mittels einer inneren Umfangswand (43) umschließt, welche mit der, mit der venturiförmigen Öffnung (32) versehenen, Grundplatte (31) verbunden ist, um eine Luftkanalisierung herzustellen, die durch das Zentrifugalgebläse (30) an den Austauschern (42) vorbeigetrieben wird.

20. Vorrichtung nach einem der Ansprüche 13 bis 19, dadurch gekennzeichnet, daß sie mindestens einen mit mechanischer Kälte gespeisten, modularen Kasten enthält, der mit einem Satz modularen, mit Tieftemperaturgas gespeisten Kästen kombiniert wird, von welchen mindestens einer zur Rekuperation der Kilokalorien dient und ebenfalls an einen Kasten mit mechanischer Kälte angeschlossen ist.

Fig. 1

0 069 688

Fig-2

Fig.3

Fig.4

## Fig. 5

## Fig. 6

Fig. 7